Europäisches Patentamt

European Patent Office

Office européen des brevets

(11) Publication number: **0 261 473 B1**

# EUROPEAN PATENT SPECIFICATION

(45) Date of publication of patent specification: **15.01.92**

(51) Int. Cl.⁵: **F02D 41/26**, F02D 41/18, F02D 41/40, F02D 43/00

(21) Application number: **87112880.7**

(22) Date of filing: **03.09.87**

---

(54) **Method for cylinder-specific engine control.**

---

(30) Priority: **03.09.86 JP 205994/86**

(43) Date of publication of application:
**30.03.88 Bulletin  88/13**

(45) Publication of the grant of the patent:
**15.01.92 Bulletin  92/03**

(84) Designated Contracting States:
**DE FR GB**

(56) References cited:
**EP-A- 0 079 570      EP-A- 0 092 828
EP-B- 0 152 288      FR-A- 2 524 554
FR-A- 2 539 820      GB-A- 2 071 872
US-A- 4 359 992      US-A- 4 442 812
US-A- 4 454 845**

**FISITA XXI, 6/86 Belgrad, paper 865016**

(73) Proprietor: **HITACHI, LTD.**
**6, Kanda Surugadai 4-chome
Chiyoda-ku, Tokyo 101(JP)**

(72) Inventor: **Ohnari, Mikihiko
3-23-12, Honda
Kokubunji-shi Tokyo(JP)**
Inventor: **Sekozawa, Teruji
4-1-2-1009, Hakusan asao-ku
Kawasaki-shi Kanagawa(JP)**
Inventor: **Funabashi, Motohisa
4-6-4-505, Araisno
Sagamihara-shi Kanagawa(JP)**
Inventor: **Atago, Takeshi
1476-51, Tarazaki
Kasuta-shi Ibaraki(JP)**
Inventor: **Shioya, Makoto
2-9-9, Narita-higashi Suginami-ku
Tokyo(JP)**

(74) Representative: **Patentanwälte Beetz sen. -
Beetz jun. Timpe - Siegfried - Schmitt-
Fumian
Steinsdorfstrasse 10
W-8000 München 22(DE)**

EP 0 261 473 B1

## Description

The present invention relates to a method for the cylinder-specific control of injection-type internal combustion engines which is well suited to reliably perform the control of the engine for all revolution numbers by means of a computer for governing the principal functions.

As described in "SYSTEMS AND CONTROL," Vol. 24, No. 5, pp. 306 - 312, 1980 (Japanese language) the individual operations of a computer program in a prior art engine control system include two kinds; one started at regular time intervals, and the other started in accordance with engine crank revolution angles.

This prior art measurement and control of the variables of the engine state based on the two kinds of timing, i.e. at time intervals and according to the crank angle ("CA") position, has the problem of mismatching, depending upon the different kinds of timing. When the measurement of the revolution number of the engine and the utilization thereof are mentioned as an example, the revolution number is measured by counting crank angle pulses (for example, 360 pulses/revolution) at certain time intervals, and the counted value is input to a computer every 10 ms. This counted value is not synchronous to the crank angle position of the engine. In case of performing a macrocontrol with average values of data in the equilibrium state in which the engine revolution number hardly changes, even the data asynchronous to the crank angle position are valid. However, in case of finely controlling the revolution number which is the integrated result of nonlinear torques generated by the combustion events, disadvantageously, the data asynchronous to the crank angle position do not correspond to the respective combustion event.

According to US-A-3 969 614, control variables are calculated in accordance with electric signals related to a selected instant in time while the engine is operative, however, this patent does not define the timing of the calculation.

According to column 2, lines 5-9 of this documents, it is the main object to use a digital computer for calculating, on a real-time basis, that is, while the engine is operative, proper settings for one or more of the controlled variables from measurements made on one or more variable engine conditions. In this document, it is further stated in column 2, lines 26-45: "While the engine is operative, an electrical signal is generated in the form of a binary number. This electrical signal is indicative of a condition of the engine as of a selected instant in time. From this binary-number electrical signal indicative of a condition of the engine, a digital computer arithmetically calculates a value corresponding to a setting of the means for controlling the energy conversion process. The digital computer is programmed to calculate the control value from an algebraic function or functions describing a desired relationship between the sensed engine condition and settings of the means for controlling the energy conversion process. The resulting value, in the form of a binary number, is converted into a setting of the means for controlling the energy conversion process. The conversion of the binary number into a setting of the engine controlling means is accomplished with the aid of a suitable electrical circuit coupled between the digital computer and the engine controlling means."

The variables which are sensed for the setting calculations and the controlled variables which are output as calculated results, are defined as follows in column 1, lines 50 - 67, "The controlled variables are throttle angle, which controls the amounts of air supplied to the engine, fuel flow per cycle, fuel-injection timing, ignition timing, and, if EGR is used, the settings of the means used to control the amount of exhaust gases recirculated through the engine. To effect control of these variables that determine the characteristics of the energy conversion process, various engine conditions may be sensed while the engine is operative. Thus one or more of the following variable engine conditions may be sensed: crankshaft position, engine speed, mass air-flow into the engine, intake-manifold pressure, throttle angle, EGR-valve position, throttle-angle rate of change, engine-speed rate of change, fuel temperature, fuel pressure, EGR-valve rate of change, vehicle speed and acceleration, engine coolant temperature, engine torque, air-to-fuel ratio, exhaust emissions, etc." In the specification of this patent, however, no statement is contained as to the timings during the engine operation at which the variables to be sensed for controlling the energy conversion process are measured.

In carburator type engines, a mixture consisting of fuel and air is supplied in an amount required by a cylinder. The mixture ratio is predetermined and is maintained despite of the volume and speed of the inlet air flow. Also for fuel injection systems, it has been considered that fuel in a volume corresponding to the inlet air flow may be injected. In accordance with this prior art no attention has been paid to the timing of the measurement of the inlet air flow.

This will be understood by considering the engine characteristics. Conventional engines have been heavy in weight and have further been equipped with a flywheel, thereby to attain a smooth rotation because of the property of absorbing small disturbances and give a stable movement owing to the great moment of inertia. Recently developed engines, however, are reduced in weight for high revolution speed and a high response. Due to the high response, the engine responds even to slight disturbances, with the result that it is liable to incur fluctuations of the engine revolution, vibrations of the car body, etc.

Further, the aforementioned patent aims at establishing the equilibrium state of the engine operation at all times as understood from the statement of column 2, lines 15 - 19: "A very important feature of the invention is that it now is possible to eliminate the engine operating instabilities characteristic of prior art engine control systems and, by this elimination, to obtain equilibrium conditions of engine operation at all times." This aim is proper for conventional engines having a great moment of inertia. For establishing the equilibrium state of such an engine, it has not always been necessary to measure the volume of air and the volume of fuel relevant for the combustion in each cyclinder and the exhaust gas being the product of the combustion, in synchronism with the timing of the combustion.

As regards the engines of light weight and high response, however, it is important for the engine control to prevent vibrations from occuring or increasing. To this end, the individual combustion events need to be controlled since the movement of the engine is a continuous process of transient states. For the prevention of the vibrations, the volume of inlet air must be measured timely and accurately so as to properly set the fuel volume and the ignition timing as desired.

EP-A-92 828, US-A-4 359 992, EP-A-152 288 and GB-A-2 071 872 describe to gather data for the combustion control of each cylinder of an internal combustion engine, such as inlet air flow, $\lambda$ -value and engine rotational speed, in synchronization with the engine revolution, and to calculate and produce output signals, e.g. ignition timing signals and fuel injection signals, in synchronism with the engine crank angle.

Further, it has been known from FR-A-2 524 554 and from paper 865016 of XXI FISITA Congress, Belgrade, 2. - 6. June, 1986, to take into account the time delay between the measured air flow signal and the actual intake into the cylinders as well as other system delays.

It is the object of the present invention to provide a control method in which the data items of all variables concerning the combustion control of the engine are gathered or output in synchronism with crank angle positions, for cylinder-specific control.

The above object is accomplished according to claim 1. The dependent claims relate to preferred embodiments.

The method as defined in the preamble of claim 1 has been known from EP-A-79 570 which relates to a $\lambda$-control system controlling the fuel injection amount on the basis of the detection of the exhaust gas amount, based on an identified preceding combustion event.

The method of the present invention for controlling Injection-type internal combustion engines comprises for each cylinder of the engine the steps of:

Gathering a plurality of variable data items (Qa, N, $\lambda$) relating to the combustion in a respective cylinder of the engine upon occurrence of respective predetermined reference crank angle positions measured relative to a predetermined reference point of the crankshaft position,

calculating control values on the basis of the gathered variable data items,

generating control signals based on the calculated control values, and

controlling the combustion in the cylinder on the basis of the generated control signals;

It is characterized in that for a current combustion process

(1) the momentaneous revolution number is determined within the course of the explosion stroke of a specific cylinder of the immediately preceding combustion process,

(2) the fuel volume to be injected into said specific cylinder is calculated on the basis of the momentaneous revolution number and the inlet air flow, measured in the immediately preceding combustion process,

and

(3) the ignition timing for said specific cylinder is calculated on the basis of the inlet air flow of the current combustion process and said injected fuel volume.

According to the invention, tasks (programs of function units) are used for the combustion control of the engine in accordance with the crank angle positions of the engine. The processing times of the respective tasks are always substantially constant because the processing contents thereof are hardly different.

In order to control the engine with high precision by the use of the newest measured data, the timings of start and end of fuel injection, the calculation of the fuel injection volume, the input of the revolution number, the input of the inlet air flow (or pressure), the outputs of calculated results, etc., as reckoned reversely from the top dead center (TDC) of each cylinder of the engine, are previously set to be, for example, synchronous with the crank angle positions of the engine, and the respective processes are executed according to these timings.

The starting point of time of the fuel injection is set at a fixed angle before the TDC. The end point of time of the fuel injection is obtained by the fuel injection volume calculation. The calculation needs to be terminated before the end point of time of fuel injection. In case the processing speed of the computer employed is high, the injection volume calculation can be terminated during a fuel injection period. In case of employing a computer of low processing speed, the injection volume calculation is initiated earlier than the starting point of time of the fuel injection.

The engine revolution number and the inlet air flow need to be input to the computer before the initiation of the fuel injection volume calculation because both the variables are used for the calculation. Since these variables are influenced by the revolution movement of the engine, they are input synchronously to the crank angle (CA) positions of the engine. The engine revolution number in the course of the continuation of combustion is measured and input so as to make it possible to measure the transient state of increase or decrease in the revolution number depending upon the combustion. Concretely, the moving time interval of the CA position difference corresponding to a period including the time interval from the start to the end of the combustion is measured, and the CA position difference is divided by the moving time, thereby to count the revolution number within a short interval immediately after the beginning of the comubstion.

The inlet air flow is measured in correspondence with the position of the crank angle which is intermediate between the TDC and the bottom dead center (BDC) of the cylinder and at which the inlet air flow becomes greatest. In cases where a measurement delay is involved in the air flow sensor measurement, the air flow is measured with a timing shifted in accordance with the extent of the delay.

The measured data of the revolution number and the inlet air flow are input to the computer basically in synchronism with the CA positions, but they are input with corresponding time delays when measurement delays exist.

In the following, an embodiment of the present invention will be described in connection with Figs. 1 - 4.

Fig. 1     shows the system arrangement of an engine control system to which the present invention is applied;

Fig. 2     is a time chart of an embodiment of the present invention;

Fig. 3     is a diagram showing the positions of the crank angle in an inlet cycle et seq. with reference to the top dead center of one cylinder, and

Fig. 4     is a flow chart illustrative of control steps according to the present invention.

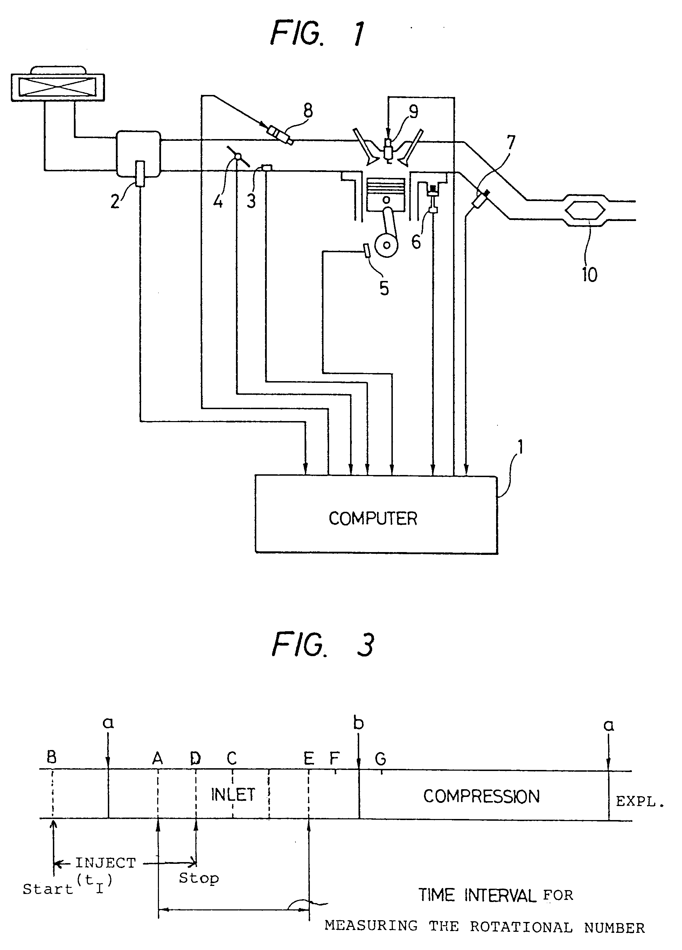

In the system shown in Fig. 1, an engine controlling computer 1 measures data for engine control from an air flow meter 2 and/or a pressure sensor 3, the throttle valve 4, a crank angle position sensor 5, a water temperature sensor 6, and an exhaust gas ($O_2$) sensor 7, whereupon it controls an injector 8 to inject fuel and controls the ignition plug 9 to ignite the mixture. The exhaust gas is cleaned by a catalytic converter 10. The output signal of the crank angle position sensor 5 is composed of a pulse of a reference point (for example, top dead center) and pulses corresponding to the crank angle (for example, 360 pulses/revolution).

The crank angle position sensor 5 is so constructed that 360 holes are provided along the outer periphery of a disc connected to the crankshaft by gears etc., while a hole for the reference point is provided inside the hole corresponding to a position of $0°$, and that photosensors each being formed of a pair of light-emitting and light-receiving diodes are mounted with the disc held between the diodes at the outer periphery and the inner side thereof. The computer 1 is supplied with the pulses which are generated each time the holes traverse the photosensor owing to the rotation of the disc.

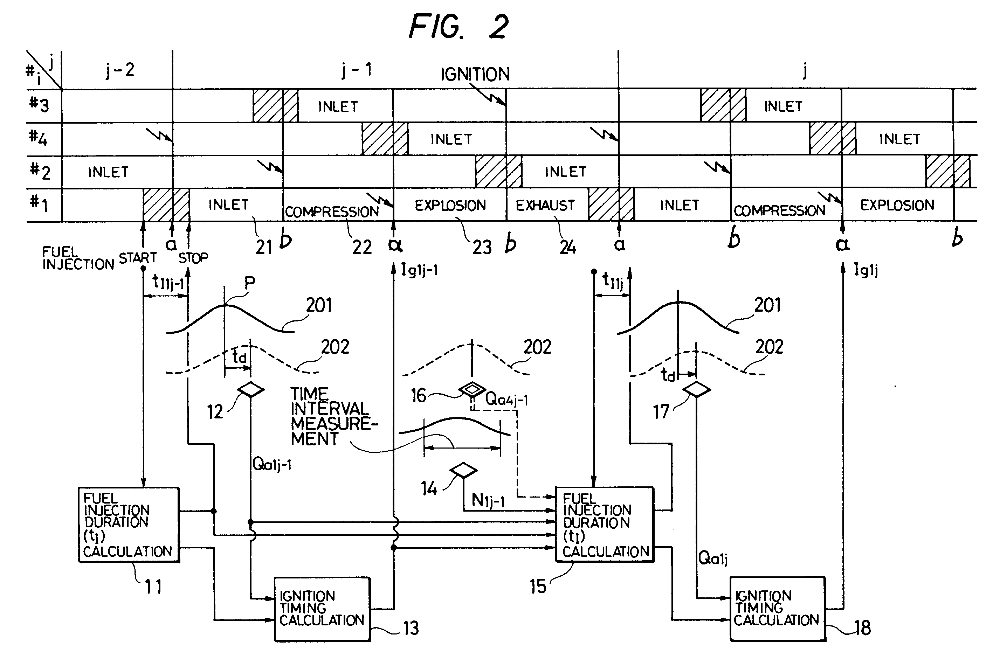

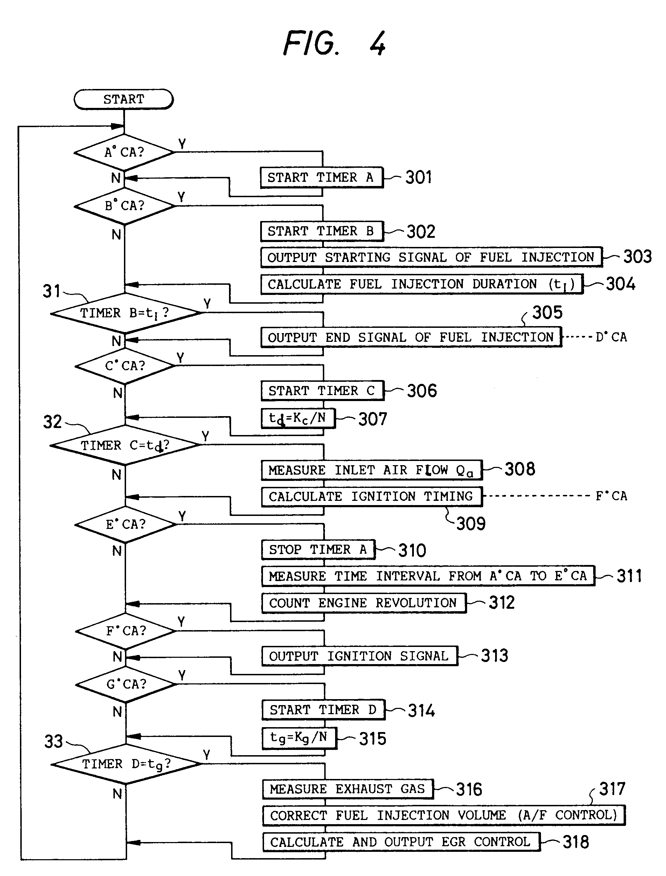

Fig. 2 shows the cycles of a four-cylinder engine, and the timings of the input of data, the calculation of the fuel injection duration ($t_l$) and the calculation of the ignition timing which are performed in synchronism with the crank angle positions measured by the crank angle position sensor 5. Fig. 3 shows the CA positions with reference to the top dead center in the inlet and compression cycles of a given cylinder.

Cylinder #1 will be referred to in the description. The calculation 11 of the fuel injection duration ($t_l$) is started with the start of fuel injection (the opening of the injector) at a fixed crank angle before the TDC a, and it determines a fuel injection duration period $\bar{t}_{l1j-1}$. When the period has lapsed, the fuel injection is ended. Injected fuel is drawn by suction into the cylinder together with the air in the next inlet cycle 21. The air volume ($Q_{a1j-1}$) 2 sucked in by this process is measured by the air flow meter 2, the pressure sensor 3, or the like. The inlet air volume is measured at a point of time which is the measurement delay time $t_d$ later than the crank angle position corresponding to a position intermediate between the top dead center a and the bottom dead center b ($C°CA$ in Fig. $\bar{3}$, corresponding to a point at which the speed of the descending piston is highest).

The inlet air volume can be measured by integrating the air flow drawn by suction into the cylinder. It is difficult, however, to detect the timing of the start and end of the suction. An effective countermeasure against this difficulty is that while the variation of the inlet air volume is being monitored, the peak value thereof is searched for, whereupon the inlet air volume drawn into the cylinder is determined from the peak value and the revolution number of the engine. When such a measuring method is adopted, the delay time $t_d$ attributed to the velocity lag of the air between the cylinder and a measuring point where the air flow meter 2 is located, can be compensated in terms of the corresponding crank angle. In Fig. 2, curve 201 indicates the variation of the air volume which is actually drawn into the cylinder, while curve 202 indicates the variation of the air volume which is measured.

The fuel injected for the duration $t_{l1j\text{-}1}$ and the inlet air volume measured as the above value $Q_{a1j\text{-}1}$ are both drawn into the cylinder, to generate a torque in the explosion cycle 23.

A required torque can be predicted from the throttle opening angle and the running condition. The ignition timing $I_{g1j\text{-}1}$ is determined and adjusted by the ignition timing calculation 13 so that the combustion of the air volume and the fuel volume already existing in the cylinder may produce the required torque.

The torque generated according to the values $t_{l1j\text{-}1}$, $Q_{a1j\text{-}1}$ und $I_{g1j\text{-}1}$ changes the engine revolution number. The revolution number $N_{1j\text{-}1}$ at that time can be determined by the inverse number of the moving time interval measured between two CA positions corresponding to the explosion duration (between A°CA and E°CA in Fig. 3). The revolution number $N_{1j\text{-}1}$ thus measured contains also a revolution number increment due to the increase by the current explosion cycle. The revolution number increment can be utilized for identifying the combustion control characteristic of the engine.

In the above, the sequence of the fuel injection volume calculation, the inlet air volume measurement, the ignition timing calculation and the revolution number measurement have been described in accordance with the lapse of time. With this sequence, however, it is not ensured that the fuel injection volume be at a ratio corresponding to the inlet air volume, in other words, that a required air/fuel ratio (hereinbelow, "A/F") be established. Therefore, the ignition timing needs to be corrected by the result of the fuel injection volume calculation so as to generate the required torque.

From the aspects of fuel economy and engine vibration prevention, the fuel injection volume should desirably be determined relative to the inlet air volume so as to establish the required A/F. However, the fuel injection volume must be determined before the measurement of the inlet air volume. The prior art has used the measured value of the past inlet air volume without taking into consideration which of the cylinders it was obtained from. In the present invention, with consideration of the correspondence between the generated torque and the fuel and air volumes of each cylinder the combustion characteristic of each cylinder is identified, whereupon the running condition is determined. Further, the intention of the driver is presumed. Then, an appropriate fuel injection volume is determined. Regarding a deviation from the predictive presumption, the correction is finally made by the ignition timing calculation.

The calculation of the identification, in a fuel injection duration ($t_1$) calculation 15 in the current process j, uses as inputs the fuel injection duration period $t_{l1j\text{-}1}$ obtained by the $t_l$ calculation 11 in the last process (j-1), the measured value 12 of the inlet air volume ($Q_{alj\text{-}1}$), the ignition timing $I_{glj\text{-}1}$ obtained by the ignition timing calculation 13 and the measured value 14 of the engine revolution number ($N_{lj\text{-}1}$), and identifies the combustion characteristic (the generated torque depending upon the A/F and the ignition angle) of the pertinent cylinder (#1 in the present example). Subsequently, the fuel injection duration Period $t_{llj}$ inthe current process j is calculated to set the end point of time of fuel injection, on the basis of the combustion characteristic in which the time-serial change of the characteristic of the particular cylinder is also considered, and with notice taken of the newest intention of the driver which is known from the measured value 16 ($Q_{a4j\text{-}1}$) of the inlet air volume of another cylinder nearest to the inlet cycle of the particular cylinder. Thereafter, the measured value 17 ($Q_{a1j}$) of the inlet air volume of the particular cylinder is obtained. In a case where it deviates from the presumed air volume, an ignition timing $I_{glj}$ corresponding to the deviation is calculated and set in an ignition timing calculation 18.

The steps of the above calculations will be described more in detail. When crank angle position signals are input to the computer in correspondence with the positions A - G of the crank angle shown in Fig. 3, computer programs for processes corresponding to the respective crank angle positions are executed in accordance with the sequence in Fig. 4.

In Fig. 3, the crank angle positions taken with reference to the top dead center a of the inlet cycle have the following significances:

| | |
|---|---|
| A°CA: | Starting point of measurement for counting revolution number |
| B°CA: | Starting point of fuel injection |
| C°CA: | Middle point between top dead center and bottom dead center |
| D°CA: | End point of fuel injection |
| E°CA: | End point of measurement for counting revolution number |
| F°CA: | Output of ignition signal |
| G°CA: | Starting point of calculation of the delay time for the measurement of exhaust gas. |

The operation of a program will be described with reference to Fig. 4. This program is adapted to start a corresponding one of predetermined subprograms either when the crank angle has come to a certain fixed position or when the value of a timer started within the program has reached a certain value. In addition, the program is so constructed as to monitor the crank angle positions and timers at all times.

When the position A°CA has been reached, the timer A is started in a block 301. The timer A is stopped in block 310 when the position E°CA has been reached, the time interval elapsed in the meantime is measured in block 311, and the revolution number ob the engine is counted in block 312.

When the position B°CA has been reached, the timer B is started in block 302, while at the same time the fuel injection is started with an output signal in block 303. The point of time till which fuel is injected, is found by the fuel injection volume ($t_i$) calculation in block 304.

When it is decided in block 31 that the timer B has coincided with $t_i$, the fuel injection is ended with an output signal in block 305.

When the position C°CA has been reached, the timer C is started in block 306, and the velocity lag $t_d$ of the inlet air volume $Q_a$ is calculated in block 307 from the engine revolution number N at that time and a constant $K_c$. When it is decided in block 32 that the value of the timer C has become equal to $t_d$, the inlet air volume $Q_a$ is measured in block 308. Besides, using the value $Q_a$, the ignition timing F°CA is calculated in block 309. At the position F°CA, the ignition signal is output in block 313.

When the position G°CA has been reached beyond the bottom dead center b, the timer D is started in block 314 in order to measure the exhaust gas, and the velocity lag $t_g$ of the exhaust gas is calculated from the engine revolution number N and a constant $K_g$ in block 315.

When it is decided in block 33 that the timer D has coincided with $t_g$, the exhaust gas is measured in block 316. Using the measured result, the fuel injection volume-correcting calculation (air/fuel ratio control) is performed in block 317, and an exhaust gas recirculation (EGR) control calculation is performed to provide an output in block 318.

Although the illustration of Figs. 3 and 4 relates to one single cylinder, the same processing is carried out for the other cylinders. Besides, multipoint injection (MPI) wherein the fuel injectors are mounted on the respective cylinders is assumed in the above description, but even in the case of single-point injection (SPI) wherein a single injector is mounted on the intake manifold, the present invention can be applied merely by altering the timing and duration period of the fuel injection.

Regarding the measurement of the inlet air volume, the use of an air flow meter has been described, however, a pressure sensor 3 is sometimes used instead of the air flow meter 2. Also in the case of using the pressure sensor for the measurement of the inlet air volume, as in the case of using the air flow sensor, the peak value (the smallest value) of the manifold pressure is measured, and the measured value is deemed the typical value of the inlet air volume, whereby the inlet air volume can be calculated.

According to the present invention, phenomena arising with the revolution of an engine are measured in accordance with crank angle positions, and computer programs are started synchronously to the crank angle positions, thereby to perform the controls of fuel injection and an ignition timing. Therefore, the physical phenomena can be precisely determined and the enhancement of the control performance and the prevention of vibrations of the engine are attained. Further, the invention facilitates to construct a control system and to match control parameters, and in turn, an enhancement of fuel economy can be attained. The reason is that, in the present invention, variables concerning the individual combustion cycle of the engine at any revolution number are measured so as to permit the identification of the combustion characteristic, so whether or not the control system or a matched result is proper can be estimated at each revolution number of the engine.

In the control of the engine, it is sometimes the case that the combustion states of respective cylinders differ and thus do not generate uniform torques. According to the present invention, these differences of the cylinders can also be detected with ease, and accordingly, the driving performance of an automobile can be improved.

**Claims**

1. A method for controlling injection-type internal combustion engines timed to reference crank angle positions comprising for each cylinder of the engine the steps of:

   Gathering a plurality of variable data items (Qa, N, λ) relating to the combustion in a respective cylinder of the engine upon occurrence of respective predetermined reference crank angle positions measured relative to a predetermined reference point of the crankshaft position,

   calculating control values on the basis of the gathered variable data items,

   generating control signals based on the calculated control values, and

controlling the combustion in the cylinder on the basis of the generated control signals, **characterized** in that for a current combustion process (j)

(1) the momentaneous revolution number ($N_{j-1}$) is determined within the course of the explosion stroke of a specific cylinder of the immediately preceding combustion process (j-1),

(2) the fuel volume to be injected into said specific cylinder ($t_{lj}$) is calculated on the basis of the momentaneous revolution number ($N_{j-1}$) and the inlet air flow ($Q_{aj-1}$), measured in the immediately preceding combustion process (j-1), and

(3) the ignition timing ($I_{gj}$) for said specific cylinder is calculated on the basis of the inlet air flow ($Q_{aj}$) of the current combustion process (j) and said injected fuel volume ($t_{lj}$).

2. The method according to claim 1, characterized in that the air/fuel ratio (A/F) is determined in the exhaust gas of the respective combustion process of the specific cylinder, and the fuel volume to be injected ($t_l$) is corrected in accordance therewith.

3. The method according to claim 1 or 2, characterized in that the reference point is the top dead center (TDC) or the bottom dead center (BCD) of the respective cylinder.

4. The method according to one of claims 1 to 3, characterized in that a delay time of the measured inlet air flow between the measurement point and the respective cylinder is compensated in terms of the crank angle.

5. The method according to one of claims 1 to 4, characterized in that the inlet air flow is measured at a plurality of intermediate crank angle positions between the top dead center (a) and the bottom dead center (b), and the maximum value thereof is taken as measured value of the inlet air flow (Qa).

6. The method according to one of claims 1 to 5, characterized in that the required torque is determined from the throttle opening angle and the running condition, and the required torque is produced by controlling the fuel volume to be injected and the ignition timing.

**Revendications**

1. Procédé pour commander des moteurs à combustion interne du type à injection, synchronisés sur des positions angulaires de référence du vilebrequin, et comprenant pour chaque cylindre du moteur les étapes consistant à :

collecter une pluralité d'éléments de données variables (Qa, N, λ) associés à la combustion dans un cylindre respectif du moteur lors de l'apparition de positions angulaires de référence respectives prédéterminées du vilebrequin, mesurées par rapport à un point de référence prédéterminé de la position du vilebrequin,

calculer des valeurs de commande sur la base des éléments de données variables collectés,

produire des signaux de commande sur la base des valeurs de commande calculées, et

commander la combustion dans le cylindre sur la base des signaux de commande produits,

caractérisé en ce que

pour un processus courant de combustion (j)

(1) la vitesse de rotation instantanée ($N_{j-1}$) est déterminée pendant la course d'explosion d'un cylindre spécifique du processus de combustion (j-1) immédiatement précédent,

(2) le volume de carburant devant être injecté dans ledit cylindre spécifique ($T_{lj}$) est calculé sur la base de la vitesse de rotation instantanée ($N_{j-1}$) et du débit d'air d'entrée ($Q_{aj-1}$), mesuré pendant le processus de combustion (j-1) immédiatement précédent, et

(3) la séquence d'allumage ($I_{gj}$) pour ledit cylindre spécifique est calculée sur la base du débit d'air d'entrée ($Q_{aj}$) du processus actuel de combustion (j), et dudit volume de carburant injecté ($t_{lj}$).

2. Procédé selon la revendication 1, caractérisé en ce que le rapport air/carburant (A/F) est déterminé dans les gaz d'échappement du processus de combustion respectif du cylindre spécifique, et le volume de carburant devant être injecté ($t_l$) est corrigé en fonction de ce rapport.

3. Procédé selon la revendication 1 ou 2, caractérisé en ce que le point de référence est le point mort haut (TDC) ou le point mort bas (BCD) du cylindre respectif.

4. Procédé selon l'une des revendications 1 à 3, caractérisé en ce qu'un retard du débit d'air d'entrée mesuré entre le point de mesure et le cylindre respectif est compensé en termes d'angle du vilebrequin.

5. Procédé selon l'une des revendications 1 à 4, caractérisé en ce que le débit d'air d'entrée est mesuré pour une pluralité de positions angulaires intermédiaires du vilebrequin entre le point mort haut (a) et le point mort bas (b), et sa valeur maximale est prise en tant que valeur mesurée du débit d'air d'entrée (Qa).

6. Procédé selon l'une des revendications 1 à 5, caractérisé en ce que le couple requis est déterminé à partir de l'angle d'ouverture du papillon des gaz et des conditions de déplacement et que le couple requis est produit au moyen de la commande du volume de carburant devant être injecté et de la séquence d'allumage.

**Patentansprüche**

1. Verfahren zur Steuerung von zu Kurbelwellenstellungen zeitsynchronisierten Brennkraftmaschinen mit Kraftstoffeinspritzung, das für jeden Zylinder der Brennkraftmaschine die folgenden Schritte umfaßt:

Erfassen einer Vielzahl von variablen Daten (Qa, N, λ), die der Verbrennung in einem entsprechenden Zylinder der Brennkraftmaschine zu vorbestimmten Kurbelwellenstellungen entsprechen, die relativ zu einer vorbestimmten Referenzstellung der Kurbelwelle gemessen werden,

Berechnen von Steuergrößen auf der Grundlage von den erfaßten variablen Daten,

Erzeugen von Steuersignalen auf der Grundlage von den berechneten Steuergrößen und

Steuerung der Verbrennung in dem Zylinder auf der Grundlage der erzeugten Steuersignale,

**dadurch gekennzeichnet,** daß

für einen laufenden Verbrennungsvorgang (j)

(1) die momentane Drehzahl ($N_{j-1}$) während des Verbrennungstaktes eines bestimmten Zylinders des unmittelbar vorangehenden Verbrennungsvorgangs (j-1) bestimmt wird,
(2) die in den spezifischen Zylinder ($t_{lj}$) einzuspritzende Kraftstoffmenge auf der Grundlage der im unmittelbar vor an gehenden Verbrennungsvorgang (j-1) gemessenen momentanen Drehzahl ($N_{j-1}$) und der

Einlaßluftmenge ($Q_{aj-1}$) berechnet wird, und
(3) der Zündzeitpunkt ($I_{gj}$) für den spezifischen Zylinder auf der Grundlage der Einlaßluftmenge ($Q_{aj}$) des laufenden Verbrennungsvorgangs (j) und der eingespritzten Kraftstoffmenge ($t_{lj}$) berechnet wird.

2. Verfahren nach Anspruch 1, dadurch gekennzeichnet, daß das Kraftstoff/Luft-Verhältnis (A/F) im Abgas des betreffenden Verbrennungsvorgangs des betreffenden Zylinders bestimmt wird und die einzuspritzende Kraftstoffmenge ($t_l$) entsprechend korrigiert wird.

3. Verfahren nach Anspruch 1 oder 2, dadurch gekennzeichnet, daß die Referenzstellung der obere Totpunkt (TDC) oder der untere Totpunkt (BCD) des betreffenden Zylinders ist.

4. Verfahren nach Anspruch 1-3, dadurch gekennzeichnet, daß eine Verzögerungszeit der gemessenen Einlaßluftmenge zwischen dem Meßpunkt und dem betreffenden Zylinder über den Kurbelwellenwinkel ausgeglichen wird.

5. Verfahren nach Anspruch 1-4, dadurch gekennzeichnet, daß die Einlaßluftmenge an mehreren Zwischenkurbelwellenstellungen zwischen dem oberen Totpunkt (a) und dem unteren Totpunkt (b) gemessen und der Maximalwert als Meßwert für die Einlaßluftmenge (Qa) verwendet wird.

6. Verfahren nach Anspruch 1-5, dadurch gekennzeichnet, daß das geforderte Drehmoment aus der Drosselklappenöffnung und dem Fahrzustand bestimmt und durch die Steuerung der einzuspritzenden Kraftstoffmenge und des Zündzeitpunks erzeugt wird.

## FIG. 1

## FIG. 3

# FIG. 2

EP 0 261 473 B1

| $\#_i$ \ $j$ | j-2 | j-1 | IGNITION | j |
|---|---|---|---|---|
| #3 | | INLET | | INLET |
| #4 | | INLET | | INLET |
| #2 | INLET | INLET | | INLET |
| #1 | INLET | COMPRESSION | EXPLOSION | EXHAUST | INLET | COMPRESSION | EXPLOSION |

21 b    22 α    23 b    24 α    b    α    b

FUEL INJECTION   START   STOP

$t_{I1j-1}$    P    201    202    $t_d$

$Ig1j-1$

$t_{I1j}$    201    202    $t_d$

$Ig1j$

12    Qa1j-1

TIME INTERVAL MEASURE- MENT

16    Qa4j-1

14    N1j-1

17

Qa1j

FUEL INJECTION DURATION ($t_I$) CALCULATION  11

FUEL INJECTION DURATION ($t_I$) CALCULATION  15

IGNITION TIMING CALCULATION  13

IGNITION TIMING CALCULATION  18

# FIG. 4

```
           START
             │
         ◇ A°CA? ──Y──────────────────┐
             │N◄───────────┐          │
                           │    ┌──────────────────┐
                           └────│ START TIMER A    │──301
                                └──────────────────┘
         ◇ B°CA? ──Y──────────────────┐
             │N                       │
                                ┌──────────────────┐
                                │ START TIMER B    │──302
                                └──────────────────┘
                          ┌────────────────────────────────────┐
                          │ OUTPUT STARTING SIGNAL OF FUEL INJECTION │──303
                          └────────────────────────────────────┘
   31                     ┌────────────────────────────────────┐
    ◇ TIMER B=t_I ? ──Y───│ CALCULATE FUEL INJECTION DURATION (t_I) │──304
             │N◄───────────┘                                    305
                          ┌────────────────────────────────────┐
                          │ OUTPUT END SIGNAL OF FUEL INJECTION │·····D°CA
                          └────────────────────────────────────┘
         ◇ C°CA? ──Y──────────────────┐
             │N                       │
                                ┌──────────────────┐
                                │ START TIMER C    │──306
                                └──────────────────┘
   32                           ┌──────────────────┐
    ◇ TIMER C=t_d? ──Y──────────│ t_d=K_c/N        │──307
             │N◄─────────────────└──────────────────┘
                          ┌────────────────────────────────────┐
                          │ MEASURE INLET AIR FLOW Q_a │──308
                          └────────────────────────────────────┘
                          ┌────────────────────────────────────┐
                          │ CALCULATE IGNITION TIMING │--------------F°CA
                          └────────────────────────────────────┘
         ◇ E°CA? ──Y──────────────────┐         309
             │N                       │
                                ┌──────────────────┐
                                │ STOP TIMER A     │──310
                                └──────────────────┘
                          ┌────────────────────────────────────┐
                          │ MEASURE TIME INTERVAL FROM A°CA TO E°CA │──311
                          └────────────────────────────────────┘
                          ┌────────────────────────────────────┐
                          │ COUNT ENGINE REVOLUTION │──312
                          └────────────────────────────────────┘
         ◇ F°CA? ──Y──────────────────┐
             │N                       │
                                ┌──────────────────┐
                                │ OUTPUT IGNITION SIGNAL │──313
                                └──────────────────┘
         ◇ G°CA? ──Y──────────────────┐
             │N                       │
                                ┌──────────────────┐
                                │ START TIMER D    │──314
                                └──────────────────┘
   33                           ┌──────────────────┐
    ◇ TIMER D=t_g? ──Y──────────│ t_g=K_g/N        │──315
             │N                 └──────────────────┘
                          ┌──────────────────┐          317
                          │ MEASURE EXHAUST GAS │──316
                          └──────────────────┘
                          ┌────────────────────────────────────┐
                          │ CORRECT FUEL INJECTION VOLUME (A/F CONTROL) │──317
                          └────────────────────────────────────┘
                          ┌────────────────────────────────────┐
                          │ CALCULATE AND OUTPUT EGR CONTROL │──318
                          └────────────────────────────────────┘
```